## Europäisches Patentamt
## European Patent Office
## Office européen des brevets

(19)

(11) Numéro de publication: **0 200 587 B1**

(12) **FASCICULE DE BREVET EUROPÉEN**

(45) Date de publication du fascicule du brevet:
10.08.88

(51) Int. Cl.⁴: **G 01 G 3/14**

(21) Numéro de dépôt: **86400601.0**

(22) Date de dépôt: **21.03.86**

(54) **Procédé pour ajuster un capteur de force à jauges résistives et capteur de force ajuste ainsi obtenu.**

(30) Priorité: **09.04.85 FR 8505337**

(43) Date de publication de la demande:
**10.12.86 Bulletin 86/45**

(45) Mention de la délivrance du brevet:
**10.08.88 Bulletin 88/32**

(84) Etats contractants désignés:
**AT BE CH DE GB IT LI LU NL SE**

(56) Documents cité:
**EP-A-0 067 664**
**EP-A-0 089 209**

(73) Titulaire: **SFERNICE SOCIETE FRANCAISE DE L'ELECTRO- RESISTANCE, 59, rue Gutenberg, F-75737 Paris Cédex 15 (FR)**

(72) Inventeur: **Cherbuy, Jean, 35 Avenue Raymond Féraud, F-06200 Nice (FR)**

(74) Mandataire: **Bouju, André, Cabinet Bouju 38 avenue de la Grande Armée, F-75017 Paris (FR)**

## Description

La présente invention concerne un procédé pour ajuster un capteur de force à jauges résistives.

L'invention vise également un capteur de force à jauges résistives ajusté notamment au moyen du procédé précité.

On connaît des capteurs du type précité (voir EP-A1-0 089 209 et EP-A1-0 667 064) comprenant un barreau élastique en métal, dont l'une des extrémités est destinée à être fixée à un support fixe et l'autre soumise à la force à mesurer. Cette force est généralement appliquée sur un plateau parallèle au barreau et relié à l'extrémité de celui-ci qui est opposée au support fixe.

Le barreau fixe porte des jauges résistives reliées électriquement entre elles en formant un pont de mesure délivrant un signal électrique qui est fonction de la force appliquée sur le plateau précité.

Cette force, suivant son point d'application sur le plateau, engendre des couples de torsion et de flexion variables sur le barreau qui modifient la valeur du signal électrique délivré par le pont de mesure et faussent ainsi la mesure de cette force.

Il convient donc de rendre cette mesure insensible à l'égard des couples parasites précités, de façon que le signal délivré soit constant, quel que soit le point d'application de la force sur le plateau.

Deux méthodes sont actuellement utilisées pour assurer l'insensibilité de la mesure de la force à l'égard des couples parasites précités.

Dans une première méthode, le plateau repose sur un système de leviers sommant les forces appliquées sur le plateau et transmettant la force résultante sur un point déterminé au dispositif de mesure.

Dans une seconde méthode, le plateau est fixé directement à un capteur de forme souvent très complexe, étudié pour minimiser l'effet des couples ou moments parasites; le capteur est ajusté en général par des actions mécaniques pour éliminer les effets résiduels des moments parasites.

Dans le procédé décrit dans la demande internationale WO-A-8 402 186, on a tenté de résoudre les difficultés précitées en éliminant le signal de torsion parasite engendré lors de l'application de la force sur le plateau, au moyen d'une ou de plusieurs jauges sensibles à la torsion et de résistances additionnelles convenables insérées dans le circuit de traitement du signal.

Cependant, ce procédé ne permet pas d'éliminer le signal parasite lié au déplacement du point d'application de la force dans une direction parallèle à l'axe du barreau élastique.

Le but de la présente invention est de créer un procédé permettant d'ajuster le capteur de force de façon que le signal électrique de mesure soit insensible aux couples de torsion et de flexion engendrés par des déplacements du point d'application de la force à mesurer, ce procédé étant de mise en oeuvre simple et aisément automatisable.

Suivant l'invention, ce procédé est caractérisé par les étapes suivantes :

A. on détermine les caractéristiques initiales du capteur,

B. on calcule les erreurs relatives du capteur dues à un déplacement de la force appliquée en fonction de l'angle $\theta$ formé entre les jauges résistives et la direction longitudinale du barreau,

C. on annule ces erreurs, en apportant à une ou plusieurs jauges résistives des modifications ayant pour effet de modifier l'angle $\theta$ précité.

La demanderesse a constaté en effet qu'il était possible de calculer les erreurs relatives du capteur, dues à des déplacements de la force appliquée en fonction de l'angle $\theta$ formé entre les jauges résistives et le barreau élastique.

De ce fait, il est possible d'annuler ces erreurs en apportant à une ou plusieurs jauges résistives, des modifications ayant pour effet de modifier l'angle $\theta$ précité.

Le procédé conforme à l'invention permet ainsi d'obtenir, en une seule séquence d'opérations, en agissant uniquement sur l'angle $\theta$ formé par une ou plusieurs jauges résistives, un capteur de force délivrant un signal rigoureusement proportionnel à la force à mesurer et ce, quel que soit le point d'application de celle-ci, relativement au barreau.

Etant donné que le procédé agit sur un seul paramètre des jauges résistives, ce procédé peut être aisément automatisable.

La demanderesse a établi que les erreurs du capteur étaient fonction de l'angle $\theta$ précité selon les relations suivantes :

$$e_x = e_{x_0} + \tfrac{1}{C_x} \Sigma \cos 2\theta$$

$$e_z = e_{z_0} + \tfrac{1}{C_z} \Sigma \sin 2\theta$$

$e_x$ et $e_z$ étant les erreurs dues à un déplacement de la force (P) appliquée respectivement suivant un axe $O_x$ du barreau et suivant un axe $O_z$ perpendiculaire à cet axe du barreau et à la force P appliquée,

$e_{x_0}$ et $e_{z_0}$ étant les erreurs initiales déterminées lors de l'étape de caractérisation initiale du capteur et

$C_x$ et $C_z$ étant des constantes connues par construction et par les conditions de la caractérisation initiale du capteur.

On peut donc, à l'aide de ces relations, calculer la correction à apporter à l'angle $\theta$ pour annuler les erreurs $e_x$ et $e_z$ précitées.

Il suffit ensuite de mettre au point une méthode industrielle et automatisable pour effectuer cette correction

de l'angle θ sur les jauges résistives.

Selon un autre aspect de l'invention, le capteur de force à jauges résistives conforme à l'invention, ce capteur comprenant un barreau élastique dont l'une des extrémités est destinée à être fixée à un support fixe et l'autre soumise à la force à mesurer, ce barreau portant des jauges résistives reliées électriquement entre elles en formant un pont de mesure, délivrant un signal électrique qui est fonction de la force appliquée sur ladite extrémité du barreau, ce capteur étant ajusté de telle sorte que le signal soit proportionnel à la force appliquée et insensible aux couples de torsion et de flexion engendrés par les déplacements du point d'application de la force à mesurer est caractérisé en ce que l'angle θ formé entre une et plusieurs des jauges résistives et la direction longitudinale du barreau satisfait aux relations suivantes:

$$e_x = e_{x_0} + \frac{1}{C_x} \Sigma \cos 2\theta = 0$$

$$e_z = e_{z_0} + \frac{1}{C_z} \Sigma \sin 2\theta = 0$$

$e_x$ et $e_z$ étant les erreurs dues à un déplacement de la force appliquée respectivement suivant l'axe $O_x$ du barreau et suivant un axe $O_z$ perpendiculaire à cet axe et à la force appliquée,

$e_{x_0}$ et $e_{z_0}$ étant les erreurs initiales déterminées lors d'une étape de caractérisation initiale du capteur, et $C_x$ et $C_z$ étant des constantes connues par construction et par les conditions de cette caractérisation initiale.

D'autres particularités et avantages de l'invention apparaîtront encore dans la description ci-après.

Aux dessins annexés, donnés à titre d'exemples non limitatifs :
- la figure 1 est une vue en perspective d'un capteur de force conforme à l'invention, fixé à un support fixe,
- la figure 2 est un schéma montrant le pont de mesure formé par les jauges résistives du capteur,
- la figure 3 est une vue schématique latérale du capteur de force, auquel est fixé un plateau d'application de la force à mesurer,
- la figure 4 est une vue schématique en bout du capteur de force et du plateau,
- la figure 5 est une vue en plan d'une jauge résistive modifiée selon l'une des versions du procédé conforme à l'invention,
- la figure 6 est une vue analogue à la figure 5, relative à une autre version du procédé,
- la figure 7 est une vue en plan de quatre jauges résistives, comprenant chacune une résistance principale et deux résistances additionnelles en série formant un angle avec la résistance principale,
- la figure 8 est une vue analogue à la figure 7, relative à un autre exemple de réalisation.

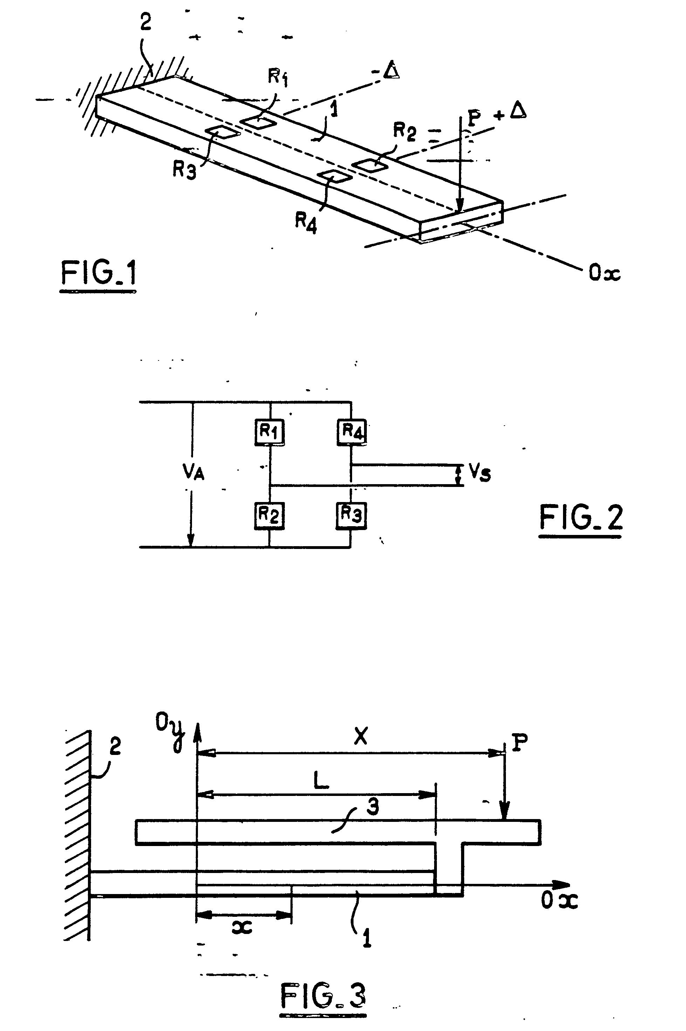

Sur la figure 1, on a représenté un barreau élastique 1, de section rectangulaire constante, fixé à un support fixe 2. L'extrémité de ce barreau 1 opposée au support 2 est soumise à une force P à mesurer, perpendiculaire à l'axe $O_x$ de ce barreau.

Sur ce barreau 1 sont placées quatre jauges résistives $R_1$, $R_2$, $R_3$, $R_4$, reliées électriquement entre elles suivant un pont de mesure (voir figure 2) alimenté par une tension d'alimentation $V_A$ et délivrant un signal de sortie $V_S$.

L'expérience montre que le rapport du signal de sortie sur le signal d'alimentation d'un tel capteur est de la forme:

$$\frac{V_S}{V_A} = A P [a + bX + cZ] + z$$

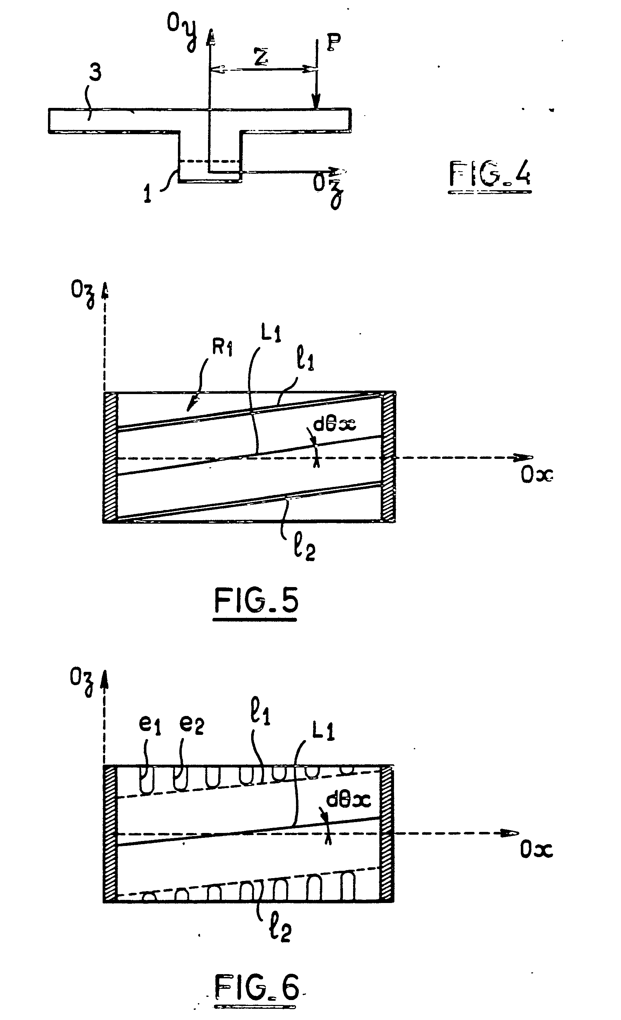

Dans cette relation, les termes PX et PZ sont les couples de flexion et de torsion parasites créés par la position de la force P sur un plateau 3 s'étendant parallèlement au barreau 1 et fixés à son extrémité opposée au support fixe 2 (voir figures 3 et 4).

La lettre z est un terme constant définissant le déséquilibre du pont de mesure en l'absence de force appliquée.

Les signaux parasites APbX et APcZ proviennent de nombreuses causes regroupables sous les rubriques principales suivantes :
- hétérogénéité métallurgique dans le barreau 1 ou dans les jauges $R_1$... $R_4$,
- erreurs de position des jauges,
- résistances parasites dans le pont de mesure,
- dimensions finies du barreau 1.

La multiplicité des causes d'erreur rend donc très aléatoire l'obtention directe d'un capteur parfait, c'est-à-dire dans lequel b et c sont nuls et de plus z est égal à 0 ou présente une valeur spécifiée.

On va tout d'abord décrire le principe qui est à la base du procédé selon l'invention.

Soit une résistance mince de longueur L, de largeur l, et d'épaisseur t liée par sa surface L. l à un substrat déformable, tel qu'un barreau élastique. La variation de cette résistance est :

$$\frac{\Delta R}{R} = \frac{\Delta \rho}{\rho} + \frac{\Delta L}{L} - \frac{\Delta l}{l} - \frac{\Delta t}{t}$$

Par ailleurs, la variation de résistivité $\Delta \rho / \rho$ est reliée à la variation de volume de la résistance $\Delta V/V$ par la relation de Bridgmann :

$$\frac{\Delta \rho}{\rho} = C \frac{\Delta V}{V} = C \left( \frac{\Delta L}{L} + \frac{\Delta l}{l} + \frac{\Delta t}{t} \right)$$

3

d'où

$$\frac{\Delta R}{R} = (C + 1)\frac{\Delta L}{L} + (C - 1)\frac{\Delta l}{l} + (C - 1)\frac{\Delta t}{t}$$

La résistance étant très mince et liée au substrat, $\frac{\Delta L}{L}$ et $\frac{\Delta l}{l}$ sont imposés par la déformation du substrat ; ces déformations engendrent des contraintes $\sigma_L$ et $\sigma_l$ dans la résistance. Par contre, la surface extérieure de la résistance est libre de se déplacer, soit $\sigma_t = 0$

La loi de Hooke dans la résistance permet d'évaluer $\frac{\Delta t}{t}$, au moyen des relations suivantes :

$$\frac{\Delta L}{L} = \frac{1}{E}(\sigma_L - \mu\sigma_l - \mu\sigma_t) = \frac{1}{E}(\sigma_L - \mu\sigma_l)$$

$$\frac{\Delta l}{l} = \frac{1}{E}(\sigma_l - \mu\sigma_t - \mu\sigma_L) = \frac{1}{E}(\sigma_l - \mu\sigma_L)$$

$$\frac{\Delta t}{t} = \frac{1}{E}(\sigma_t - \mu\sigma_L - \mu\sigma_l) = -\frac{\mu}{E}(\sigma_L + \sigma_l)$$

Les deux premières relations donnent:

$$\sigma_L + \sigma_l = \frac{E}{1-\mu}\left(\frac{\Delta L}{L} + \frac{\Delta l}{l}\right)$$

La troisième : $\frac{\Delta t}{t} = -\frac{\mu R}{1-\mu R}\left(\frac{\Delta L}{L} + \frac{\Delta l}{l}\right)$

$\mu R$ = coeff. de Poisson de la résistance. Ainsi:

$$\frac{\Delta R}{R} = (C + 1)\frac{\Delta L}{L} + (C - 1)\frac{\Delta l}{l} - \frac{\mu R}{1-\mu R}(C - 1)\left[\frac{\Delta L}{L} + \frac{\Delta l}{l}\right]$$

$$\frac{\Delta R}{R} = \left[C - (C - 1)\frac{\mu R}{1-\mu R}\right]\left[\frac{\Delta L}{L} + \frac{\Delta l}{l}\right] + \frac{\Delta L}{L} - \frac{\Delta l}{l}$$

Si maintenant la longueur L de la résistance fait un angle $\theta$ avec la direction principale $O_x$ du barreau dont l'état de déformation plane est spécifié par ses trois composantes : $\varepsilon_x\ \varepsilon_z\ \gamma_{xz}$, les formules classiques donnent les déformations $\frac{\Delta L}{L}$ et $\frac{\Delta l}{l}$ dans la résistance, soit :

$$\frac{\Delta L}{L} = \varepsilon L = \varepsilon x \cos^2\theta + \gamma_{xz} \sin\theta \cos\theta + \varepsilon_z \sin^2\theta$$

$$\frac{\Delta l}{l} = \varepsilon 1 = \varepsilon x \cos^2\left(\theta+\tfrac{\pi}{2}\right) + \gamma xz \sin\left(\theta+\tfrac{\pi}{2}\right)\cos\left(\theta+\tfrac{\pi}{2}\right) + \varepsilon z \sin^2\left(\theta+\tfrac{\pi}{2}\right)$$

$$\varepsilon l = \varepsilon x \sin^2\theta - \gamma xz \sin\theta \cos\theta + \varepsilon z \cos^2\theta$$

Par suite:

$$\frac{\Delta L}{L} + \frac{\Delta l}{l} = \varepsilon x + \varepsilon z$$

$$\frac{\Delta L}{L} - \frac{\Delta l}{l} = (\varepsilon x - \varepsilon z) \cos 2\theta + \gamma \sin 2\theta$$

$$\frac{\Delta R}{R} = \left(c - (c - 1)\frac{\mu R}{1-\mu R}\right)(\varepsilon x + \varepsilon z) + (\varepsilon x - \varepsilon z) \cos 2\theta + \gamma \sin 2\theta$$

Les raisonnements classiques de résistance des matériaux permettent d'exprimer les déformations superficielles $\varepsilon_x\ \varepsilon_z\ \gamma_{xz}$ à l'abscisse x du barreau 1 (voir figures 3 et 4), en fonction des efforts appliqués à son extrémité libre : charge transversale P, moment de flexion P(X - L), moment de torsion PZ on a :

$$\varepsilon x = \frac{P v}{EI}(X - x)$$

$$\varepsilon z = -\mu \frac{P v}{EI}(X - x)$$

$$\gamma = \frac{P v}{C} \cdot Z$$

dans lesquelles :

EI : rigidité du barreau 1 en flexion
C : rigidité du barreau 1 en torsion
2v : épaisseur du barreau 1
L : longueur du barreau 1
$\mu$ : coefficient de Poisson du barreau 1
d'où:

4

$$\varepsilon x + \varepsilon z = AP (1 - \mu) (X - x)$$

$$\varepsilon x - \varepsilon z = AP (1 + \mu) (X - x)$$

$$\gamma = AP . BZ$$

($A = v/EI$ et $B = EI/C$ caractérisent le barreau 1.)

Les déformations superficielles peuvent être exprimées de façon plus détaillée ; les expressions simples ci-dessus sont cependant suffisantes pour la compréhension du procédé.

La variation d'une résistance liée au barreau 1 chargé devient alors:

$$\frac{\Delta R}{R} = r = AP [ (c - (c - 1) \tfrac{\mu R}{1 - \mu R} (1 - \mu) (X-x) + (1 + \mu) (X - x) \cos 2\theta + BZ \sin 2\theta]$$

$$r = AP [G (X - x) + (1 + \mu) (\cos 2\theta - 1) (X - x) + BZ \sin 2\theta]$$

$$G = (C - (C - 1) x \tfrac{\mu R}{1 - \mu R} (1 - \mu) + 1 + \mu$$

est le coefficient de jauge longitudinal, habituellement considéré en extensométrie ; il est égal à 2 quand le coefficient de Bridgmann, $C = \frac{\Delta \rho/\rho}{\Delta v/v}$ est égal à 1, ce qui est approximativement le cas pour beaucoup d'alliages usuels.

L'expression ci-dessus s'applique aux matériaux piezorésistifs isotropes caractérisés par $C > 1$.

Le signal d'un pont constitué de 4 résistances de valeurs ohmique $R_1$, $R_2$, $R_3$, $R_4$ égales liées au barreau (A, B) est:

$$S = \frac{VS}{VA} = \tfrac{1}{4}(r_1 - r_2 + r_3 + r_4) = \tfrac{1}{4} \Sigma r, \text{ avec } r_i = \frac{\Delta R}{R_i} = \frac{AP}{4} [G \Sigma (X - x) + (1 + \mu) \Sigma (\cos 2\theta - 1) (X - x) + BZ \Sigma \sin 2\theta]$$

Les résistances non connexes impaires $R_1$, $R_3$ ayant pour abscisse $- \Delta$ et les résistances paires $R_2$, $R_4 + \Delta$ comme indiqué figure 1, le signal est:

$$S = \frac{AP}{4} [4G\Delta + (1 + \mu) \Delta \Sigma (\cos 2\theta - 1) + (1 + \mu) X \Sigma \cos 2\theta + BZ\Sigma \sin 2\theta]$$

dans cette expression et celles qui seront utilisées par la suite :

$\Sigma (a)$ représente la somme $a_1 + a_2 + a_3 + a_4$

$\Sigma (a)$ représente la some dans le pont : $a_1 - a_2 + a_3 - a_4$.

Si tous les angles $\theta$ sont nuls, le signal S se réduit à

$$\frac{AP}{4} 4G\Delta$$

La partie du signal liée aux angles $\theta$ est:

$$S\theta = \frac{AP}{4} [ (1 + \mu) \Delta \Sigma (\cos 2\theta - 1) + (1 + \mu)x\Sigma \cos 2\theta + BZ \Sigma\sin 2\theta]$$

En superposant l'influence des angles $\theta$ isolée ci-dessus au signal d'un capteur réel qui, ainsi que le montre l'expérience, est de la forme :

$$\frac{AP}{4}[a + bX + cZ] + z$$

$a \cong 4G\Delta$

$bX << a$        erreur liée à la position X de P

$cZ << a$        erreur liée à la position Z de P

$z$        erreur de zéro du pont

on obtient :

$$S = \frac{AP}{4} [4G\Delta + (1 + \mu) \Delta \Sigma (\cos 2\theta - 1) + (b + (1 + \mu)\Sigma\cos 2\theta) X + (c + B\Sigma\sin 2\theta) Z] + z + \Delta z$$

$$S = \frac{AP}{4} [4G\Delta + (1 + \mu) \Delta \Sigma (\cos 2\theta - 1) + (b + (1 + \mu)\Sigma\cos 2\theta)X + (C + B\Sigma\sin 2\theta)Z] + z + \Delta z$$

Cette expression montre que des modifications des angles $\theta$ sur des résistances de parité appropriée

5

permettent d'annuler les coefficients de X et de Z au prix d'une petite perte .e sig . . . . ⵑΣ (cos2θ - 1) et d'une variation du zéro Δz (qui pourra d'ailleurs être compensée, comme on le verra). Elle constitue la base du procédé que l'on va maintenant décrire.

Bien que les angles initiaux θ puissent être a priori quelconques, il est clair qu'il est avantageux de les choisir nuls pour que la perte de signal $(1 - \mu) \Delta\Sigma (\cos2\theta - 1)$ soit initialement nulle.

Le procédé ne se préoccupe pas directement de l'origine des erreurs initiales b, c, z : il les constate et les annule en une seule séquence opératoire constituée des étapes suivantes :

- caractérisation initiale du capteur,
- ajustage des résistances du pont de jauges,
- contrôle final du capteur.

A la fin de cette séquence, le capteur est un composant quadripôle intégré assurant la fonction S = kP (k = constante) dans les tolérances spécifiées. Lors de la caractérisation initiale du capteur, on détermine les erreurs initiales de celui-ci, en soumettant le barreau à des forces prédéterminées appliquées successivement sur le plateau ou dispositif similaire, en deux points symétriques par rapport au centre du pont de jauges dans l'axe longitudinal du barreau et en deux points également symétriques par rapport au centre précité disposés sur un axe perpendiculaire au précédent.

L'erreur relative due à une excentration X de P sur le plateau 3 suivant l'axe Ox est :

$$e_x = \frac{bX}{4G\Delta} + \frac{(1+\mu)X}{4G\Delta} \Sigma \cos2\theta = e_x + \frac{1}{C_i} \Sigma \cos2\theta.$$

L'erreur relative due à une excentration Z de P sur le plateau 3 suivant Oz est :

$$e_z = \frac{cZ}{4G\Delta} + \frac{BZ}{4G\Delta} \Sigma \sin2\theta = e_{z_0} + \frac{1}{C_i} \Sigma \sin2\theta$$

Le réglage du capteur consiste:
à annuler ex : $\Sigma \cos2\theta = - C_x e_{x_0}$
à annuler ez : $\Sigma \sin2\theta = - C_z e_{z_0}$
à annuler ou régler la valeur désirée le zéro $z + \Delta z$.

Les erreurs initiales $e_{x_0}$ et $e_{z_0}$ sont connues par la caractérisation initiale du capteur ; Cx et Cz sont connus par construction (G, Δ, B, μ,) et par les conditions de la caractérisation (X, Z).

La mise en oeuvre du principe de réglage énoncé précédemment doit assurer l'indépendance des réglages :

$$\Sigma \cos2\theta = - Cx \, ex_0 \quad \text{et} \quad \Sigma \sin2\theta = - Cz \, ez_0 \text{ et,}$$

prévoir des moyens industriels de faire varier les angles θ. Ces deux points sont traités successivement.

Les deux méthodes suivantes sont proposées pour assurer l'indépendance des réglages.

· 1 ère méthode : Si, partant d'angles θ nuls, on crée un angle dθ sur une résistance $R_1$, $R_2$, $R_3$, ou $R_4$, les valeurs de sin2dθ et cos2dθ sont modifiées simultanément, ez et ex varient simultanément, ce qui interdit généralement d'obtenir ex = ez = 0.

L'indépendance des réglages ex = 0 et ez = 0 est assurée en partageant chacun d'eux par moitié sur une résistance modifiée de l'angle + dθ et sur une autre résistance modifiée de l'angle - dθ.

Pour le réglage ex = 0 les résistances modifiées sont de même parité.
Pour le réglage ez = 0 les résistances modifiées sont de parité différente.

Réglage ex = 0
Situation initiale : $\Sigma \cos2\theta = \cos0 - \cos0 + \cos0 - \cos0 = 1 - 1 + 1 - 1$
La moitié de l'erreur $ex_0$ est compensée en modifiant de $+ d\theta_x$ une résistance:

$$\Sigma \cos2\theta = \pm (\cos2d\theta_x + 1) \mp (1+1) = \pm (\cos2d\theta_x - 1) = - Cx \frac{ex_0}{2}$$

l'autre moitié de $ex_0$ est compensée en modifiant de $- d\theta_x$ la résistance de même parité.

$$\Sigma \cos2\theta = \pm (\cos2d\theta_x + \cos2(- d\theta_x)) \mp (1+1) = \pm 2(\cos2d\theta_x - 1) = - Cx \, e_{x_0}$$

$$e_x = e_{x_0} + \frac{1}{C_x} \Sigma \cos2\theta = e_{x_0} + \frac{1}{C_x} (- C_x \, e_{x_0}) = 0$$

L'erreur $e_x$ est annulée et la répercussion sur $e_z$ est nulle :

$$e_z = e_{z_0} + \frac{1}{C_z} [ \pm (\sin2\theta_x + \sin2(- d\theta_x)) \pm (0 + 0) ] = e_{z_0}$$

Réglage $e_z = 0$
Initialement : $\Sigma \sin2\theta = 0 - 0 + 0 - 0$
Première moitié : $\pm [\sin2d\theta_z] \mp (0 - 0) = \pm \sin2d\theta_z = - C_z \frac{ez_0}{2}$
Deuxième moitié : $\pm [\sin2d\theta_z - \sin2(- d\theta_z)] \mp (0-0 = \pm 2\sin2d\theta_z = - C_z \, e_{z_0}$

ez est maintenant nulle et la répercussion sur $e_x = 0$ déjà réalisée est également nulle :

$\frac{1}{C_x} [ \pm (\cos 2d\theta_z - \cos 2(-d\theta_z)) - = 0$

- les deux réglages peuvent être faits dans un ordre quelconque
- choix des résistances à ajuster (signes $\pm$ dans les expressions ci-dessus) :

Réglage $e_x = 0$ :

si $e_{x0} > 0$,

$\Sigma \cos 2\theta$ doit être négatif:
on modifie donc les résistances impaires, $\cos 2d\theta_x - 1$ est $< 0$ si $e_{x0} < 0$,

$\Sigma \cos 2\theta$ doit être positif :

on modifie les résistances paires : $- (\cos 2d\theta_x - 1)$ est $> 0$.

Réglage $e_z = 0$ :

si $e_{z0} > 0$,

$\Sigma \sin 2\theta$ doit être negatif:

on modifie une résistance paire de $+ d\theta_z$ et une impaire de $-d\theta_z$
si $e_{z0} < 0$,

$\Sigma \sin 2\theta$ doit être positif :

on modifie une résistance impaire de $+ d\theta_z$ et une résistance paire de $- d\theta_z$.
Grandeurs des angles $d\theta_x$ et $d\theta_z$ :

$$\cos 2d\theta_x - 1 \cong \frac{(2d\theta_x)^2}{2} = C_x \frac{|e_x0|}{2} \qquad\qquad d\theta_x \cong (\frac{C_x|e_x0|}{4})^{1/2}$$

$$\sin 2d\theta_z \cong 2d\theta_z = C_z \frac{|e_x0|}{2} \qquad\qquad d\theta_z \cong \frac{C_z|e_x0|}{4}$$

. Ordres de grandeur :

avec $G = 2$ et $\frac{X}{\Delta} = \frac{Z}{\Delta} = 3$, $C_x \cong 2$, $C_z \cong 3$

et $e_{x0} = e_{z0} = 0,03$.

La méthode de réglage partagé décrite ci-dessus nécessite donc de créer des angles :

$$d\theta_x = (\frac{2.0,03}{4})^{1/2} = 0,12 \text{ rad}$$

$$d\theta_z = \frac{3.0,03}{4} = 0,02 \text{ rad}$$

. 2ème méthode: Si l'on accepte une perte systématique de signal, on peut obtenir une quasi indépendance des réglages sans avoir à les partager comme précédemment (chacun des réglages sera fait sur une seule résistance) en implantant dans chaque groupe de même parité une résistance à $\theta = 0$, spécialisée dans le réglage $e_z = 0$ et une résistance à $\theta = \frac{\pi}{4}$, spécialisée dans le réglage $e_x = 0$.
Tous les réglages se font alors par la fonction $\sin 2(0+d\theta)$ et toutes les répercussions sont en $\cos 2(0+d\theta)$.
Situation initiale:

$\Sigma \cos 2\theta = \cos 0 - \cos 0 + \cos 2\frac{\pi}{4} - \cos 2\frac{\pi}{4} = 0$

$\Sigma \sin 2\theta = \sin 0 - \sin 0 + \sin 2\frac{\pi}{4} - \sin 2\frac{\pi}{4} = 0$

(Cette configuration n'apporte pas d'erreur $e_x$ en $e_z$).
Réglage $e_x = 0$ sur les résistances à $\pi/4$ :
On choisit un signe pour $d\theta_x$ et on détermine la parité de la résistance à retoucher en fonction du signe de $e_{x0}$ et du signe choisi pour $d\theta_x$ ; on crée $d\theta_x$ sur la résistance convenable :

$\Sigma \cos 2\theta = 1 - 1 \pm \cos 2(\frac{\pi}{4} + d\theta_x) = \mp \sin 2d\theta_x = - C_x e_{x0} \rightarrow d\theta_x \cong \frac{C_x e_{x0}}{2}$

la répercussion sur $e_z$ est très petite :

$$\frac{1}{C_i}[0 - 0 \pm \sin2(\tfrac{\pi}{4}+d\theta_x) \mp \sin2\tfrac{\pi}{4}] = \pm \frac{1}{C_i}(\cos2d\theta_x - 1) = \pm \frac{(C_ie_{x0})^2}{2C_i}$$

$e_{z0}$ devient $e_{z1'} = e_{z0} \pm \frac{(C_ie_{x0})^2}{2C_i}$

On mesure $e_{z1}$ et on le prend comme donnée pour le réglage $e_z = 0$.

**Le réglage** $e_z = 0$ sur les résistances à 0°.

On choisit la parité et le signe de $d\theta_z$ en fonction de $e_{z1}$ et on crée $d\theta_z$ sur la résistance convenable :

$$\Sigma \sin2\theta = \pm (\sin2d\theta_z - 0) \mp (1 - 1) = \sin2d\theta_z = -C_z e_{z1} \rightarrow d\theta_z = \frac{C_z e_{z1}}{2}$$

la répercussion sur $e_x = 0$ déjà réglée est très petite.

$$\frac{1}{C_i} \Sigma \cos2d\theta = \frac{1}{C_i} [\pm (\cos 2d\theta_z - 1) + \cos^2\tfrac{\pi}{2} - \tfrac{\cos\pi}{2}] = \frac{1}{C_i} (\cos2d\theta_z - 1) \cong \pm \frac{(C_ie_{z1})^2}{2C_i}$$

L'ordre de grandeur des répercussions étant connu dès la caractérisation initiale du capteur, on peut écrire le programme de façon à minimiser l'erreur résiduelle. Cette méthode entraîne systématiquement une perte relative du signal égale à :

$$\frac{(1+\mu)\Delta\Sigma(\cos2\theta - 1)}{4G\Delta} = \frac{1+\mu}{4G}(-2) = -\frac{1+\mu}{2G}$$

Grandeur des angles :

le réglage $e_x = 0$ entraîne la création d'un angle $d\theta_x = \frac{C_x e_{x0}}{2}$

le réglage $e_z = 0$ entraîne la création d'un angle $d\theta_z = \frac{C_z e_{z1}}{2}$

et laisse une répercussion maximale

soit $\frac{(C_ie_{x0})^2}{2C_i}$ sur l'erreur $e_x$

soit $\sim \frac{(C_ie_{z1})^2}{2C_i}$ sur l'erreur $e_z$

On peut choisir par programmation l'ordre des ajustages de façon à ne laisser que la plus petite des deux. Celle-ci tend d'ailleurs vers zéro après un second cycle de réglage.

Après avoir déterminé par le calcul les corrections à apporter aux angles θ et assuré l'indépendance des réglages ($e_x = e_z = 0$), on utilise l'une ou l'autre des deux méthodes décrites ci-après pour modifier les angles θ initiaux des jauges résistives.

La première méthode s'applique exclusivement aux résistances à couches (mince ou épaisse).

Cette méthode consiste à découper, avec un faisceau laser par exemple, dans les jauges résistives $R_1,...R_4$, initialement rectangulaires, un parallèlogramme (voir figure 5) défini par deux sillons $l_1$ et $l_2$ parallèles, dont la longueur électrique $L_1$ fait réellement par rapport à l'orientation initiale $0_x$ l'angle $d\theta_x$ ou $d\theta_z$ déterminé par les expressions précédentes en fonction de la caractérisation initiale.

On peut également pratiquer sur les bords longitudinaux des jauges résistives $R_1,...R_4$ des encoches $e_1$, $e_2$ ... (voir figure 6) transversales à la direction $0_x$ ou $0_z$ de façon que la longueur électrique résultante $L_1$ forme avec la direction initiale $0_x$ ou $0_z$ l'angle $d\theta_x$ ou $d\theta_z$ déterminé par les relations précédentes.

La sensibilité maximale de l'erreur $e_x$ ou $e_z$ à la variation d'angle $d\theta_x$ ou $d\theta_z$ est de $\frac{de}{d\theta} = \frac{1}{C_x \text{ ou } C_z}.1$

soit en ordre de grandeur de $\frac{1}{2} d\theta$

Le contrôle de l'erreur à 0,001 près exige donc un contrôle angulaire à 0,002 rad. près ; des machines d'ajustage par laser du commerce tiennent aisément cette précision.

Avec les ordres de grandeurs précédemment utilisés, la variation maximale du zéro entraînée par les réglages $e_x = 0$ et $e_z = 0$ est

$|\Delta z| = \frac{1}{2} 2(\frac{1}{2} d\theta) = 0,06$ \hfill (avec $\frac{1}{2} = 1$)

pour la méthode du réglage partagé.

$|\Delta z| = \frac{1}{2}\frac{1}{2} (d\theta_x + d\theta_z) = 0,02$ \hfill (avec $\frac{1}{2} = 1$)

pour la méthode des résistances spécialisées.

Ces variations sont annulées par ajustage fonctionnel classique d'une résistance de parité convenable suivant son axe de symétrie transversal pour ne pas modifier l'angle.

La seconde méthode proposée consiste à utiliser des jauges résistives formées chacune par une résistance principale Ro formant un angle déterminé avec l'axe longitudinal $0_x$ du barreau 1, chaque résistance principale Ro étant reliée avec des résistances additionnelles Ra, Rb, ..., de valeur ohmique faible devant celle de la résistance principale Ro et formant un certain angle avec la direction de la résistance Ro.

Pour annuler les erreurs $e_x$ et $e_z$ on modifie la valeur ohmique d'une ou plusieurs de ces résistances additionnelles Ra, Rb, cette modification ayant pour effet de modifier l'angle virtuel de la jauge résistive avec l'axe $0_x$ du barreau 1.

Cette seconde méthode s'applique à toutes les sortes de jauges résistives (grilles ou couches). Elle repose sur l'énoncé suivant :

Soit une résistance formée de résistances en série $R = R_0 + R_1 + ... + R_n$, de même abscisse x (pour simplifier l'exposé, qui peut d'ailleurs être transposé à des résistances parallèles):

$R_0$ fait l'angle $\theta_0$ avec l'axe longitudinal du barreau 1, $R_n$ l'angle $\theta_n$.

$$r = \frac{\Delta R}{R} = \frac{\Delta R_0}{R} + \frac{\Delta R_1}{R} + ... + \frac{\Delta R_n}{R} = \frac{R_0}{R}\frac{\Delta R_0}{R_0} + \frac{R_1}{R}\frac{\Delta R_1}{R_1} + ... + \frac{R_n}{R}\frac{\Delta R_n}{R_n} = \rho_0 r_0 + \rho_1 r_1 + ... + \rho_n r_n = \Sigma \rho_i r_i$$

A l'aide de la formule établie précédemment :

$r_i = AP[G(X - x) + (1+\mu)(X - x)(\cos2\theta_i - 1) + BZ \sin2\theta_i]$, on calcule :

$$r = \Sigma\rho_i r_i = AP[G(X - x) \Sigma\rho_i + (1+\mu)(X - x)(\Sigma\rho_i\cos2\theta_i - \Sigma\rho_i) + BZ \Sigma\rho_i\sin2\theta_i]$$

soit en tenant compte de

$$\frac{R_0}{R} + \frac{R_1}{R} + ... + \frac{R_n}{R} = \Sigma\rho_i = 1$$

$$r = AP[G(X - x) + (1+\mu)(X - x)(\Sigma\rho_i\cos2\theta_i - 1) + BZ \Sigma\rho_i\sin2\theta_i]$$

Les sommes de vecteurs $\Sigma\rho_i\cos2\theta_i$, $\Sigma\rho_i \sin2\theta_i$ sont respectivement proportionnelles à

$$\cos \operatorname{arctg} \frac{\Sigma\rho_i\sin2\theta_i}{\Sigma\rho_i\cos2\theta_i}$$

et

$$\sin \operatorname{arctg} \frac{\Sigma\rho_i\sin2\theta_i}{\Sigma\rho_i\cos2\theta_i}$$

et jouent le rôle de $\cos2\theta$ et $\sin2\theta$ dans la formule d'une résistance unique.

La résistance composite $R = R_0 + R_1 + ... + R_n$ se comporte comme une résistance unique d'angle virtuel égal à :

$$\operatorname{arctg} \frac{\Sigma\rho_i\sin2\theta_i}{\Sigma\rho_i\cos2\theta_i}$$

On peut donc régler un capteur équipé de telles résistances en modifiant leurs angles virtuels uniquement par ajustage classique des rapports de résistances $\rho_i$.

Deux exemples de configuration sont donnés ci-après :

**Exemple I**

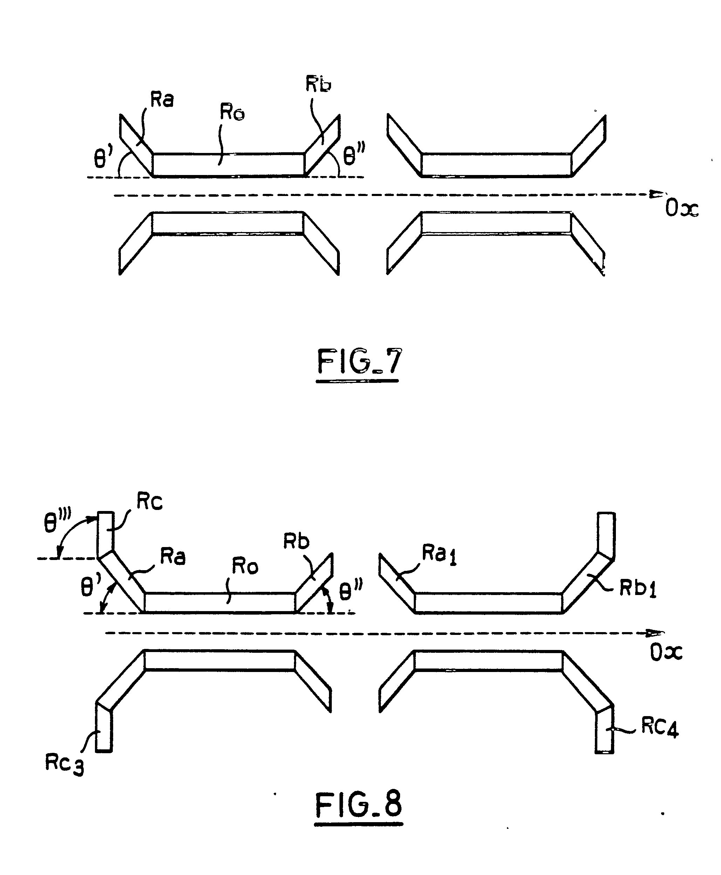

Comme indiqué sur la figure 7, chaque jauge résistive du pont est formée d'une résistance principale $R_0$ de poids $\rho$ proche de 1, formant un angle $\theta$ nul avec $O_x$ soit $\sin2\theta = 0$ et $\cos2\theta = 1$, en série avec une résistance $R_a$ de poids $\rho' << 1$ formant un angle $\theta' = \frac{\pi}{4}$ avec $O_x$, soit : $\sin2\theta' = 1$, $\cos2\theta' = 0$ et avec une résistance $R_b$ de poids $\rho'' = \rho' << 1$ ; formant un angle $\theta'' = -\frac{\pi}{4}$ avec $O_x$, soit $\sin2\theta'' = -1$, $\cos2\theta'' = 0$. On calcule directement :

$$\Sigma\rho_i\sin2\theta_i = \rho x0 + \rho'x1 + \rho''x(-1) = \rho' - \rho''$$

$$\Sigma\rho_i\cos2\theta_i = \rho x1 + \rho'x0 + \rho''x0 = \rho = 1 - (\rho' + \rho'')$$

L'angle virtuel initial $\operatorname{arctg} \frac{\rho'-\rho''}{\rho}$ est nul si $\rho' = \rho''$ pour chaque résistance.

$\Sigma(1 - \rho' - \rho'') = \Sigma(\rho' - \rho'')$ et $\Sigma(\rho' - \rho'')$ sont également nuls dans un pont constitué de 4 résistances identiques, et cette configuration n'apporte par elle-même aucune erreur du type $e_x$ ou $e_z$. S'il existe des écarts entre les différents $\rho'$ et $\rho''$, les erreurs résultantes sont comptées dans $ex_0$ et $ez_0$ lors de la mesure initiale.

Le réglage du capteur consiste à augmenter de $d\rho'$ et $d\rho''$ les rapports $\rho'$ et $\rho''$ pour obtenir :

$$\Sigma(-d\rho' - d\rho'') = -C_x ex_0 \qquad\qquad \text{et ainsi annuler ex}$$

$$\Sigma(d\rho' - d\rho'') = -C_z ez_0 \qquad\qquad \text{et ainsi annuler ez.}$$

Les $d\rho'$ et $d\rho''$ - nécessairement positifs - interviennent à la fois dans ex et dans ez.

Comme dans la méthode de modification directe des angles, l'indépendance des réglages est assurée en les partageant sur deux résistances (de même parité pour ex = 0, de parité différente pour ez = 0), une résistance étant modifiée par $d\rho'$ et l'autre par $d\rho''$.

Réglage ex = 0 :

$$\pm (d\rho'_x + d\rho''_x) = - C_x ex_0 \qquad\qquad d\rho'_x = d\rho''_x = \tfrac{C_x|ex_0|}{2}$$

Répercussion sur ez :

$$\pm \tfrac{1}{C_z} (d\rho'_x - d\rho''_x) = 0$$

Réglage ez = 0 :

$$\pm (d\rho'_z - (- d\rho''_z)) = - C_z ez_0 \qquad\qquad d\rho'_z = d\rho''_z = \tfrac{C_z|ez_0|}{2}$$

répercussion sur ex :

$$\pm \tfrac{1}{C_z} (d\rho'_z - d\rho''_z) = 0$$

Le signe de $ex_0$ détermine la parité (signe $\pm$) du groupe ajusté pour faire ex = 0.

Le signe de $ez_0$ détermine la combinaison (parité/ angle) de la résistance série utilisée pour réaliser ez = 0.

Dans la méthode de découpe directe des angles exposée précédemment, on peut calculer et programmer la valeur des angles $d\theta$ à créer.

Dans la présente méthode, les paramètres de réglages sont les rapports $\rho'$ et $\rho''$ qui peuvent ne pas être accessibles à la mesure et donc pas programmables. On représente alors les variations de ces rapports $d\rho'$, $d\rho''$ par les variations toujours mesurables du zéro du pont.

Les rapports $\rho'$, $\rho''$ ont été définis par les rapports résistance série/résistance totale, de sorte que

$$d\rho' = \tfrac{\Delta R'}{R + \Delta R'} \cong \tfrac{dR'}{R} \text{ et } d\rho'' \cong \tfrac{dR''}{R}$$

La variation du zéro du pont est par ailleurs :

$$\Delta z = \tfrac{1}{4}\Sigma \left(\tfrac{dR}{R\,total} + \tfrac{dR'}{R\,total} + \tfrac{dR''}{R\,total}\right) \cong \tfrac{1}{4}\Sigma (d\rho + d\rho' + d\rho'')$$

On peut ainsi programmer les $d\rho$ par des variations de zéro et piloter les réglages.

ex = 0 entraîne une variation de zéro $= \tfrac{1}{4}\left(\tfrac{C_x|ex_0}{2} + \tfrac{C_x|ex_0}{2}\right)$

puisqu'on ajuste deux résistances de même parité.

ez = 0 entraîne une variation du zéro $= \tfrac{1}{4}\left(\tfrac{C_x|ex_0}{2} - \tfrac{C_x|ez_0}{2}\right)$

puisqu'on ajuste deux résistances de parité différente.

L'incertitude provenant de l'approximation

$$d\rho' = \tfrac{dR'}{R + dR'} \cong \tfrac{dR'}{R}$$

est levée si nécessaire, en arrêtant le réglage à 90 % (par exemple) de la valeur calculée, en prenant une nouvelle mesure des erreurs et en calculant une nouvelle modification du zéro.

Après les réglages ex = 0 et ez = 0, le zéro, quel qu'il soit, est amené à la valeur spécifiée par ajustage fonctionnel classique d'une résistance principale de parité convenable.

**Exemple II**

Comme indiqué sur la figure 8, chaque jauge résistive du pont est formée d'une résistance principale $R_0$ de poids $\rho$ proche de 1, formant un angle $\theta$ nul avec $0_x$, soit $\sin 2\theta = 0$, $\cos 2\theta = 1$, en série avec une résistance $R_a$ de poids $\rho' << 1$, formant un angle $\theta' = \tfrac{\pi}{4}$ avec $O_x$, soit $\sin 2\theta' = 1$, $\cos 2\theta' = 0$, avec une résistance $R_b$ de poids $\rho'' = \rho'$ formant un angle $\theta'' = -\tfrac{\pi}{4}$ avec $O_x$ et $\sin 2\theta'' = -1$, $\cos 2\theta'' = 0$ et avec une résistance $R_c$ de poids $\rho''' << 1$, formant un angle $\theta''' = \pm \tfrac{\pi}{2}$ avec $O_x$, soit $\sin 2\theta''' = 0$, $\cos 2\theta''' = -1$.

On calcule directement :

$$\Sigma \rho_i \sin 2\theta_i = \rho x0 + \rho' x1 + \rho'' x(-1) + \rho''' x0 \qquad = \rho' - \rho''$$
$$\Sigma \rho_i \cos 2\theta_i = \rho x1 + \rho' x0 + \rho'' x0 + \rho''' x(-1) \qquad = \rho - \rho'''$$
$$= 1 - (\rho' + \rho'' + 2\rho''')$$

L'angle virtuel initial arctg $\frac{\rho'-\rho''}{\rho-\rho'''}$ est nul si $\rho' = \rho''$ et un pont de jauge constitué de quatre telles résistances identiques n'introduit pas d'erreurs dues à la configuration.

Le réglage du capteur consiste à faire :

$$\Sigma\,(1 - (d\rho' + d\rho'' + 2d\rho''')\,) = \Sigma\,(-d\rho'- d\rho'' - 2d\rho''') \quad = - C_x ex_0$$

$$\Sigma\,(d\rho' - d\rho'') \qquad\qquad\qquad\qquad\qquad = - C_z ez_0$$

Les résistances $R_c$ à 90° de poids $\rho'''$ ne jouent aucun rôle dans le réglage $e_z = 0$.

L'indépendance des réglages est donc assurée si l'on règle dans l'ordre : d'abord $e_z = 0$ par $\rho'$ ou $\rho''$ (ou les deux par réglage partagé) puis $e_x = 0$ par $\rho'''$, puis le zéro sur une résistance principale $\rho$.

Examinons d'abord le cas de la méthode de l'ajustage partagé.

Dans les relations :

$$\Sigma\,(d\rho' - d\rho'') = (d\rho' - d\rho'')_1 - (d\rho' - d\rho'')_2 + (d\rho' - d\rho'')_3 - (d\rho' - d\rho'')_4$$

$$\text{et } \Sigma\,(- d\rho' - d\rho'' - 2d\rho''') = (- d\rho' - d\rho'' - 2d\rho''')_1 - (-d\rho' - d\rho'' - 2d\rho''')_2 + (- d\rho' - d\rho'' - 2d\rho''')_3 - (- d\rho' - d\rho'' - 2d\rho''')_4,$$

$d\rho'_1$ et $d\rho'_3$, $d\rho''_1$ et $d\rho''_3$, $d\rho'_2$ et $d\rho'_4$, $d\rho''_2$ et $d\rho''_4$, $d\rho'''_1$ et $d\rho'''_3$, $d\rho'''_2$ et $d\rho'''_4$

jouent le même rôle - on peut donc sans inconvénient ne pas implanter les résistances série $R_a$, $R_b$, $R_{a1}$, $R_{b1}$, $R_{c3}$ et $R_{c4}$, présentant respectivement les poids $\rho'_1$, $\rho''_1$, $\rho'_2$, $\rho''_2$, $\rho'''_3$ et $\rho'''_4$, par exemple.

Les grandeurs de réglage deviennent alors :

$$\Sigma\,(d\rho' - d\rho'') = (d\rho' - d\rho'')_3 - (d\rho' - d\rho'')_4 = (d\rho'_3 + d\rho''_4) - (d\rho''_3 + d\rho'_4)$$

$$\Sigma\,(- d\rho' - d\rho'' - 2d\rho''') = - 2(d\rho'''_1 - d\rho'''_2) - (d\rho'_3 - d\rho''_4) - (d\rho''_3 - d\rho'_4)$$

Les angles virtuels initiaux des quatre jauges résistives du pont sont nuls ; cette configuration n'introduit en elle-même ni erreur du type $e_x$ ou $e_z$, ni perte de signal.

Le réglage $e_z = 0$ est obtenu par :

$$\Sigma\,(d\rho' - d\rho'') = - C_z ez_0$$

en augmentant $\rho''_3$ et $\rho'_4$ de la même quantité :

$$d\rho''_3 = d\rho'_4 = +\frac{C_z ez_0}{2}, \text{ si } ez_0 > 0$$

$$d\rho'_3 = d\rho''_4 = -\frac{C_z ez_0}{2}, \text{ si } ez_0 < 0$$

$e_x$ n'a pas varié : $e_x = e_{x0} + \frac{1}{C_x}(\frac{C_z ez_0}{2} - \frac{C_z ez_0}{2}) = e_{x0}$

Au cours de la première moitié du réglage $(d\rho''_3)$ le zéro varie approximativement de :

$$\tfrac{1}{4}\Sigma\,d\rho''_3 = \frac{C_z ez_0}{2.4}$$

et au cours de la seconde moitié, de :

$$\tfrac{1}{4}\Sigma\,d\rho'_4 = - \frac{C_z ez_0}{2.4}$$

Ces variations permettent de programmer le réglage avec au besoin, une ou plusieurs mesures intermédiaires $e_{z1}$ $e_{z2}$ ...

Après le réglage $e_z = 0$, le zéro est revenu à sa valeur initiale.

Le réglage $e_x = 0$ est ensuite obtenu par :

$$\Sigma\,(-2d\rho''') = - 2(d\rho'''_1 - d\rho'''_2) = - C_x e_{x0}$$

on augmente $\rho'''_1$ (si $ex_0 > 0$) de $d\rho'''_1 = \frac{C_x ex_0}{2}$

ou

$\rho'''_2$ (si $ex_0 < 0$) de $d\rho'''_2 = - \frac{C_x ex_0}{2}$

Au cours de ce réglage, le zéro varie ap, .......  .ement de :

$$\tfrac{1}{4} \Sigma\, d\rho''' = \tfrac{1}{4}\, \tfrac{C_z e_{z0}}{2}$$

Le nouveau zéro est annulé ou amené à la valeur désirée par ajustage fonctionnel classique d'une résistance principale ($\theta = 0$) de parité déterminée par le signe du nouveau zéro.

On peut simplifier encore la configuration et, au lieu de partager le réglage $e_z = 0$ comme précédemment, ne faire ce réglage que sur une seule résistance inclinée, avec toutefois un rattrapage du zéro plus important en valeur maximale.

Dans la première des grandeurs de réglage écrites précédemment :

$$\Sigma\, (d\rho' - d\rho'') = (d\rho'_3 + d\rho''_4) - (d\rho''_3 + d\rho'_4)$$

$$\Sigma\, (- d\rho' - d\rho'' - 2\rho''') = - 2(d\rho'''_1 - d\rho'''_2) - (d\rho'_3 - d\rho''_4) - (d\rho''_3 - d\rho'_4)$$

On peut supprimer un élément dans chaque parenthèse ($d\rho''_3$ et $d\rho''_4$ par exemple) sans diminuer la capacité de réglage $e_z = 0$.

Les équations de réglage deviennent :

$$\Sigma\, (d\rho' - d\rho'') = d\rho'_3 - d\rho'_4 = - C_z e_{z0}$$

$$\Sigma\, (- d\rho' - d\rho'' - 2d\rho''') = - 2(d\rho'''_1 - d\rho'''_2) - (d\rho'_3 - d\rho'_4) = - C_x e_{x0}$$

On obtient $e_z = 0$ en augmentant

$\rho'_3$ de $- C_z e_{z0}$ , si $e_{z0} < 0$

ou

$\rho'_4$ de $C_z e_{z0}$ , si $e_{z0} > 0$

Après ce réglage, $e_x$ est devenu $e_{x1} = e_{x0} + \tfrac{1}{C_x} C_z e_{z0}$ et le zéro a varié $\pm \tfrac{1}{4} C_z e_{z0}$
On mesure (ou on calcule) $e_{x1}$ et on l'annule par :

$$d\rho'''_1 - d\rho'''_2 = \tfrac{1}{2} C_x e_{x1} = \tfrac{C_x e_{x0} + C_z e_{z0}}{2}$$

en augmentant $\rho''_1$ de $\tfrac{C_x e_{x1}}{2}$ , si $e_{x1} > 0$

ou

$\rho'''_2$ de $- \tfrac{C_x e_{x1}}{2}$ , si $e_{x1} < 0$

Ce réglage $e_{x1} = 0$ n'intervient pas sur $e_z = 0$ déjà effectué, mais entraîne une nouvelle variation du zéro de :

$$\tfrac{1}{4} \Sigma\, d\rho''' = \pm \tfrac{1}{4}\, \tfrac{C_x e_{x1}}{2} = \pm \tfrac{C_x e_{x0} + C_z e_{z0}}{2}$$

Quelle qu'elle soit, la nouvelle valeur du zéro est mesurée puis mise à la valeur voulue par ajustage fonctionnel classique d'une résistance principale ($\theta=0$) de parité convenable, déterminée par le signe du "zéro".

Bien entendu, tous les calculs précités peuvent être exécutés au moyen d'un ordinateur qui calcule ainsi automatiquement les corrections à appliquer aux jauges.

**Revendications**

1. Procédé pour ajuster un capteur de force à jauges résistives ($R_1$, $R_2$, $R_3$, $R_4$), ce capteur comprenant un barreau élastique (1) dont l'une des extrémités est destinée à être fixée à un support fixe (2) et l'autre soumise à la force (P) à mesurer, ce barreau (1) portant des jauges résistives ($R_1$, ... $R_4$) reliées électriquement entre elles en formant un pont de mesure délivrant un signal électrique qui est fonction de la force appliquée sur ladite extrémité du barreau, ce procédé permettant d'ajuster le capteur de façon que le signal électrique soit proportionnel à la force appliquée et insensible aux couples de torsion et de flexion engendrés par des déplacements du point d'application de la force (P) à mesurer, ce procédé étant caractérisé par les étapes suivantes :

0 200 587

A. on détermine les caractéristiques initiales du capteur,

B. on calcule les erreurs relatives du capteur dues à un déplacement de la force (P) appliquée, en fonction de l'angle $\theta$ formé entre les jauges résistives ($R_1$, ... $R_4$) et la direction longitudinale ($O_x$) du barreau,

C. on annule ces erreurs en apportant à une ou plusieurs jauges résistives des modifications ayant pour effet de modifier l'angle $\theta$ précité.

2. Procédé conforme à la revendication 1, caractérisé en ce qu'on calcule les erreurs du capteur à l'aide des relations suivantes :

$$e_x = e_{x_0} + \tfrac{1}{C_x} \Sigma \cos 2\theta$$

$$e_z = e_{z_0} + \tfrac{1}{C_z} \Sigma \sin 2\theta$$

$e_x$ et $e_z$ étant les erreurs dues à un déplacemeent de la force (P) appliquée respectivement suivant l'axe ($O_x$) du barreau (1) et suivant un axe ($O_z$) perpendiculaire à cet axe du barreau et à la force (P) appliquée, $e_{x_0}$ et $e_{z_0}$ étant les erreurs initiales déterminées lors de l'étape de caractérisation initiale du capteur et $C_X$ et $C_Z$ étant des constantes connues par construction et par des conditions de la caractérisation initiale du capteur et on détermine à partir de ces relations les corrections à apporter à l'angle $\theta$ de chaque résistance pour annuler les erreurs $e_x$ et $e_z$.

3. Procédé conforme à la revendication 2, les jauges résistives formant avec l'axe $O_x$ du barreau un angle $\theta$ nul, caractérisé en ce que pour annuler l'erreur $e_x$, on applique sur une jauge résistive de parité convenable une correction :

$$d\theta_x \cong \left(\tfrac{C_x |e_x|}{4}\right) 1/2$$

et sur l'autre jauge de même parité une correction $-d\theta_x$, et pour annuler l'erreur $e_z$, on applique sur une jauge de parité convenable une correction de :

$$d\theta_z \cong \tfrac{C_z |e_z|}{4}$$

et sur une jauge de parité différente, une correction $-d\theta_z$.

4. Procédé conforme à la revendication 2, les jauges résistives comprenant dans chaque groupe de même parité une jauge formant un angle $\theta = 0$ et une jauge formant un angle $\theta = \tfrac{\pi}{4}$, caractérisé en ce que pour annuler l'erreur $e_x$, on applique sur l'une des jauges $\theta = \tfrac{\pi}{4}$, une correction :

$$d\theta_x = \tfrac{C_x |e_x|}{2}$$

et pour annuler l'erreur $e_z$, on applique sur une jauge $\theta = 0$ une correction :

$$d\theta_z = \tfrac{C_z |e_z|}{2}$$

5. Procédé conforme à l'une des revendications 3 ou 4, les jauges résistives ($R_1$, ... $R_4$) étant constituées par des couches résistives en forme de rectangles, appliquées sur le barreau (1), caractérisé en ce que pour corriger l'angle $\theta$ des jauges résistives, on découpe dans lesdites couches deux sillons parallèles ($l_1$, $l_2$) formant un parallélogramme avec les deux côtés opposés du rectangle formés par chaque jauge, ces sillons formant avec la direction initiale de ces jauges, l'angle $d\theta_x$ ou $d\theta_z$ déterminé par les relations précitées.

6. Procédé conforme à l'une des revendications 3 ou 4, les jauges résistives ($R_1$, ... $R_4$) étant constituées par des couches résistives en forme de rectangles, appliquées sur le barreau (1), caractérisé en ce que pour corriger l'angle $\theta$ des jauges résistives, on pratique sur les bords longitudinaux de celles-ci des encoches transversales ($e_1$, $e_2$, ...) par rapport à la longueur, de façon que la direction électrique résultante ($L_1$) de ces jauges forme avec la direction initiale, l'angle $d\theta_x$ ou $d\theta_z$ déterminé par les relations précitées.

7. Procédé conforme à l'une des revendications 5 ou 6, caractérisé en ce que lesdits sillons ($l_1$) ou ($l_2$) ou encoches ($e_1$, $e_2$, ...) sont découpés au moyen d'un faisceau laser.

8. Procédé conforme à l'une des revendications 3 ou 4, les jauges résistives étant formées par une résistance principale ($R_0$) formant un angle déterminé avec l'axe longitudinal ($O_x$) du barreau (1), chaque résistance principale ($R_0$) étant reliée en série avec une résistance additionnelle ($R_a$, $R_b$) de valeur ohmique faible par rapport à celle de la résistance principale ($R_0$) et formant un certain angle $\theta$ avec la résistance principale, caractérisé en ce que pour annuler les erreurs ($e_x$) et ($e_z$), on modifie la valeur ohmique d'une ou plusieurs de ces résistances additionnelles ($R_a$, $R_b$), cette modification ayant pour effet de modifier l'angle virtuel de la jauge résistive avec l'axe ($O_x$) du barreau (1).

9. Capteur de force à jauges résistives ($R_1$, ... $R_4$), ce capteur comprenant un barreau élastique (1) dont l'une des extrémités est destinée à être fixée à un support fixe (2) et l'autre soumise à la force (P) à mesurer, ce barreau (1) portant des jauges résistives ($R_1$, ... $R_4$) reliées électriquement entre elles en formant un pont de mesure délivrant un signal électrique qui est fonction de la force (P) appliquée sur ladite extrémité du barreau, ce capteur étant ajusté de telle sorte que le signal soit proportionnel à la force (P) appliquée et insensible aux couples de torsion et de flexion engendrés parles déplacements du point d'application de la force à mesurer,

13

caractérisé en ce que l'ar . . . né entre une ou plusieurs des jauges résistives $(R_1, ... R_4)$ et la direction longitudinale $(O_x)$ du barreau (1) satisfait aux relations suivantes :

$$e_x = e_{x_0} + \tfrac{1}{C_i} \Sigma \cos 2\theta = 0$$

$$e_z = e_{z_0} + \tfrac{1}{C_i} \Sigma \sin 2\theta = 0$$

$e_x$ et $e_z$ étant les erreurs dues à un déplacement la force (P) appliquée respectivement suivant l'axe $(O_x)$ du barreau (1) et un axe $(O_z)$ perpendiculaire à cet axe du barreau et à la force appliquée,

$e_{x_0}$ et $e_{z_0}$ étant les erreurs initiales déterminées lors de l'étape de caractérisation initiale du capteur et $C_x$ et $C_z$ étant des constantes connues par construction et par les conditions de cette caractérisation initiale.

10. Capteur de force conforme à la revendication 9, les jauges résistives $(R_1, ... R_4)$ étant constituées par des couches résistives en forme de rectangles, appliquées sur le barreau (1), caractérisé en ce que les jauges résistives $(R_1, ... R_4)$ présentent deux sillons parallèles $(I_1, I_2)$ découpés formant un parallélogramme avec les deux côtés opposés du rectangle formé par chaque jauge, ces sillons formant avec la direction initiale de ces jauges un angle $d\theta_x$ ou $d\theta_z$ déterminé par les relations suivantes :

$$d\theta_x \cong (\tfrac{C_x|e_{x0}|}{4})^{1/2}$$

$$d\theta_z \cong \tfrac{C_z|e_{z0}|}{4}$$

11. Capteur de force conforme à la revendication 9, caractérisé en ce que chaque jauge résistive comprend une résistance principale $(R_0)$ formant un angle déterminé avec l'axe longitudinal $(O_x)$ du barreau (1), chaque résistance principale $(R_0)$ étant reliée en série avec des résistances additionnelles $(R_a, R_b, ...)$, de valeur ohmique faible par rapport à celle de la résistance principale $(R_0)$ et formant un certain angle $\theta$ avec la résistance principale, et en ce que la valeur ohmique d'une ou plusieurs des résistances additionnelles a été modifiée, cette modification ayant pour effet de modifier l'angle virtuel de la jauge résistive avec l'axe du barreau (1).

## Patentansprüche

1. Verfahren zur Justierung einer Kraftmeßeinrichtung mit resistiven Dehnungselementen $(R_1, R_2, R_3, R_4)$, wobei diese Meßeinrichtung einen elastischen Stab (1) aufweist, dessen eines Ende zur Befestigung an einem festen Träger (2) bestimmt ist und das andere dazu, eine zu messende Kraft (P) aufgebracht zu bekommen, wobei dieser Stab (1) resistive Dehnungselemente $(R_1, ... R_4)$ trägt, die untereinander elektrisch verbunden sind, wodurch sie eine Meßbrücke bilden, die ein elektrisches Signal abgibt, das von der auf das genannte Stabende aufgebrachten Kraft abhängt, wobei es dieses Verfahren erlaubt, die Meßeinrichtung so zu justieren, daß das elektrische Signal proportional zu der aufgebrachten Kraft ist und unempfindlich für Torsions- und Biegemomente ist, die durch Verlagerungen des Angriffspunktes der zu messenden Kraft (P) erzeugt werden, wobei dieses Verfahren durch die folgenden Schritte gekennzeichnet ist:
   A. Die Anfangskenndaten der Meßeinrichtung werden festgelegt,
   B. die relativen Fehler der Meßeinrichtung, die auf einer Verlagerung der aufgebrachten Kraft (P) beruhen, werden als Funktion des Winkels $\theta$, der zwischen den resistiven Dehnungselementen $(R_1, ... R_4)$ und der Längsrichtung $(O_x)$ des Stabes gebildet ist, berechnet,
   C. diese Fehler werden dadurch zum Verschwinden gebracht, daß an einem oder an mehreren resistiven Dehnungselementen Änderungen vorgenommen werden, die eine Änderung des vorgenannten Winkels $\theta$ nach sich ziehen.

2. Verfahren nach Anspruch 1, dadurch gekennzeichnet, daß die Fehler der Meßeinrichtung mit Hilfe folgender Beziehungen berechnet werden:

$$e_x = e_{x_0} + \tfrac{1}{C_i} \Sigma \cos 2\theta$$

$$e_z = e_{z_0} + \tfrac{1}{C_i} \Sigma \sin 2\theta$$

wobei $e_X$ und $e_Z$ die Fehler sind, die durch eine Verlagerung der aufgebrachten Kraft (P) längs der Achse $(O_x)$ des Stabes (1) bzw. längs einer Achse $(O_z)$, die zu jener Achse des Stabes und der aufgebrachten Kraft (P) senkrecht steht, entstehen,

wobei $e_{x_0}$ und $e_{z_0}$ die Anfangsfehler sind, die bei der anfänglichen Kenndatenbestimmung der Meßeinrichtung gefunden werden, und

wobei $C_x$ und $C_z$ Konstanten sind, die aus der Bauweise der Meßeinrichtung und aus den Bedingungen der Anfangskenndatenbestimmung bekannt sind, und auf diesen Beziehungen aufbauend werden die Korrekturwerte für den Winkel $\theta$ jedes resistiven Dehnungselements bestimmt, um die Fehler $e_x$ und $e_z$ zu beseitigen.

0 200 587

3. Verfahren nach Anspruch 2, bei welchem die resistiven Dehnungselemente mit der Achse $O_x$ des Stabes einen Winkel $\theta$ Null bilden, dadurch gekennzeichnet, daß zur Beseitigung des Fehlers $e_x$ an einem resistiven Dehnungselement geeigneter Parität eine Korrektur:

$$d\theta_x \cong \left(\tfrac{c_i|e_z|}{4}\right) 1/2$$

angebracht wird und daß an dem anderen resistiven Dehnungselement gleicher Parität eine Korrektur $-d\theta_x$ angebracht wird, und daß zur Beseitigung des Fehlers $e_z$ an einem resistiven Dehnungselement geeigneter Parität eine Korrektur:

$$d\theta_z \cong \tfrac{c_i|e_z|}{4}$$

angebracht wird und daß an einem resistiven Dehnungselement abweichender Parität eine Korrektur $-d\theta_z$ angebracht wird.

4. Verfahren nach Anspruch 2, bei welchem die resistiven Dehnungselemente in jeder Gruppe gleicher Parität ein resistives Dehnungselement aufweisen, das einen Winkel $\theta = 0$ bildet, sowie ein resistives Dehnungselement, das einen Winkel $\theta = \tfrac{\pi}{2}$ bildet, dadurch gekennzeichnet, daß zur Beseitigung des Fehlers $e_x$ an einem der resistiven Dehnungselemente $\theta = \tfrac{\pi}{2}$ eine Korrektur:

$$d\theta_x = \tfrac{c_i|e_x|}{2}$$

angebracht wird und daß zur Aufhebung des Fehlers $e_z$ an einem resistiven Dehnungselement $\theta = 0$ eine Korrektur:

$$d\theta_x = \tfrac{c_i|e_z|}{2}$$

angebracht wird.

5. Verfahren nach Anspruch 3 oder 4, bei welchem die resistiven Dehnungselemente ($R_1, \ldots R_4$) aus resistiven Schichten in Form von Rechtecken aufgebaut sind, die auf dem Stab (1) aufgebracht sind, dadurch gekennzeichnet, daß zur Korrektur des Winkels $\theta$ der resistiven Dehnungselemente in die genannten Schichten zwei parallele Rillen ($l_1$, $l_2$) eingeschnitten werden, die ein Parallelogramm mit den zwei einander gegenüberliegenden Seiten des Rechtecks, das von jedem resistiven Dehnungselement gebildet wird, bilden, wobei diese Rillen mit der Ausgangsrichtung dieser resistiven Dehnungselemente den Winkel $d\theta_x$ oder $d\theta_z$ bilden, der durch die vorhergenannten Beziehungen bestimmt wird.

6. Verfahren nach Anspruch 3 oder 4, bei welchem die resistiven Dehnungselemente ($R_1, \ldots R_4$) aus resistiven Schichten in Form von Rechtecken gebildet werden, die auf den Stab (1) aufgebracht sind, dadurch gekennzeichnet, daß zur Korrektur des Winkels $\theta$ der resistiven Dehnungselemente an deren Längsrändern zur Längsrichtung querverlaufende Einschnitte ($e_1$, $e_2$, ...) eingebracht werden, in der Weise, daß die resultierende Richtung des Stroms ($L_1$) dieser resistiven Dehnungselemente mit der Anfangsrichtung den Winkel $d\theta_x$ oder $d\theta_z$ bildet, der durch die vorgenannten Beziehungen bestimmt ist.

7. Verfahren nach Anspruch 5 oder 6, dadurch gekennzeichnet, daß die genannten Rillen ($l_1$) oder ($l_2$) oder Einschnitte ($e_1$, $e_2$, ...) mit Hilfe eines Laserstrahls ausgeschnitten werden.

8. Verfahren nach Anspruch 3 oder 4, bei welchem die resistiven Dehnungselemente durch einen Hauptwiderstand ($R_0$) gebildet sind, der einen bestimmten Winkel mit der Längsachse ($O_x$) des Stabes (1) bildet, wobei jeder Hauptwiderstand ($R_0$) in Serie geschaltet ist mit einem zusätzlichen Widerstand ($R_a$, $R_b$), der einen im Verhältnis zum Hauptwiderstand ($R_0$) kleinen ohmschen Widerstandswert aufweist und einen bestimmten Winkel $\theta$ mit dem Ausgangswiderstand bildet, dadurch gekennzeichnet, daß zur Beseitigung der Fehler ($e_x$) und ($e_z$) der ohmsche Widerstandswert eines oder mehrerer dieser zusätzlichen Widerstände ($R_a$, $R_b$) verändert wird, wobei diese Veränderung zur Folge hat, daß der scheinbare Winkel zwischen dem resistiven Dehnungselement und der Achse ($O_x$) des Stabes (1) verändert wird.

9. Kraftmeßeinrichtung mit resistiven Dehnungselementen ($R_1, \ldots R_4$), mit einem elastischen Stab (1), dessen eines Ende zur Befestigung an einen festen Träger (2) vorgesehen ist und das andere die zu messende Kraft (P) aufnimmt, wobei dieser Stab (1) resistive Dehnungselemente ($R_1, \ldots R_4$) trägt, die untereinander elektrisch verbunden sind und so eine Meßbrücke bilden, die ein elektrisches Signal abgibt, das von der Kraft (P) abhängt, die auf das genannte Ende des Stabes aufgebracht wird, wobei diese Meßeinrichtung so justiert ist, daß das Signal proportional zu der aufgebrachten Kraft (P) und unempfindlich gegen Torsions-und Biegemomente ist, die durch die Verlagerungen der Angriffspunkte der zu messenden Kraft eingebracht werden, dadurch gekennzeichnet, daß der Winkel $\theta$, der zwischen einem oder mehreren der resistiven Dehnungselemente ($R_1, \ldots R_4$) und der Längsrichtung ($O_x$) des Stabes (1) gebildet ist, folgenden Bedingungen genügt:

$$e_x = e_{z_0} + \tfrac{1}{c_i} \Sigma \cos 2\theta = 0$$

$$e_z = e_{z_0} + \tfrac{1}{c_i} \Sigma \sin 2\theta = 0$$

15

wob-i $e_x$ L ... hler sind, die auf einer Verlagerung der Kraft (P) entlang der Achse ($O_x$) des Stabes (1) bzw. einer Achse ($C_2$), die senkrecht zu dieser Achse des Stabes und der eingebrachten Kraft ist, beruhen,

wobei $e_{x_0}$ und $e_{z_0}$ die Anfangsfehler sind, die bei der Anfangskenndatenermittlung der Meßeinrichtung bestimmt werden, und

wobei $C_x$ und $C_z$ Konstanten sind, die aus der Bauweise und aus den Bedingungen dieser Anfangskenndatenermittlung bekannt sind.

10. Kraftmeßeinrichtung nach Anspruch 9, bei welcher die resistiven Dehnungselemente ($R_1$, ... $R_4$) aus resistiven Schichten in Form von Rechtecken gebildet sind, die auf den Stab (1) aufgebracht sind, dadurch gekennzeichnet, daß die resistiven Dehnungselemente ($R_1$, ... $R_4$) zwei herausgeschnittene, parallele Rillen ($l_1$, $l_2$) aufweisen, die mit den beiden einander gegenüberliegenden Seiten des von jedem resistiven Dehnungselement gebildeten Rechtecks ein Parallelogramm bilden, wobei zwischen diesen Rillen und der Anfangsrichtung dieser resistiven Dehnungslemente ein Winkel $d\theta_x$ oder $d\theta_z$ gebildet wird, der durch folgende Beziehungen festgelegt wird:

$$d\theta_x \, \pi \cong \left(\frac{C_x |e_x|}{4}\right) 1/2$$

$$d\theta_z \, \pi \cong \frac{C_z |e_z|}{4}$$

11. Kraftmeßeinrichtung nach Anspruch 9, dadurch gekennzeichnet, daß jedes resistive Dehnungselement einen Hauptwiderstand ($R_0$) aufweist, der mit der Längsachse ($O_x$) des Stabes (1) einen bestimmten Winkel bildet, wobei jeder Hauptwiderstand ($R_0$) in Serie geschaltet ist mit zusätzlichen Widerständen ($R_a$, $R_b$, ...), die im Verhältnis zum Hauptwiderstand ($R_0$) einen niedrigen ohmschen Wert aufweisen und zum Hauptwiderstand in einem bestimmten Winkel $\theta$ stehen, und daß der ohmsche Wert eines oder mehrerer der zusätzlichen Widerstände verändert wurde, wobei diese Veränderung zur Folge hat, daß der scheinbare Winkel zwischen dem resistiven Dehnungselement und der Achse des Stabes (1) verändert wird.

## Claims

1. A method for adjusting a resistance-gage force transducer (resistance gages $R_1$, $R_2$, $R_3$, $R_4$,) comprising a resilient bar (1) attached at one end to a stationary support (2) and subjected at the other end to the force (P) to be measured, said bar (1) being adapted to carry resistance gages ($R_1$, ...$R_4$) electrically connected to each other so as to form a measuring bridge for delivering an electrical signal which is a function of the force applied to said end of the bar, said transducer being adjustable by means of said method in such a manner as to ensure that said electrical signal is proportional to the applied force and insensitive to the torsional and flexural couples generated by the displacements of the point of application of the force (P) to be measured, said method being characterized by the following steps :

A. Determination of the initial characteristics of the transducer,

B. Computation of the relative errors of the transducer arising from a displacement of the applied force (P) as a function of the angle $\theta$ formed between the resistance gages ($R_1$, ... $R_4$) and the longitudinal direction ($0_x$) of the bar,

C. Cancellation of these errors by making modifications in one or a number of resistance gages in order to produce a modification of the angle $\theta$ aforesaid.

2. A method according to claim 1, characterized in that the errors of the transducer are computed by means of the following relations :

$$e_x = e_{x_0} + \tfrac{1}{C_x} \Sigma \cos 2\theta$$

$$e_z = e_{z_0} + \tfrac{1}{C_z} \Sigma \sin 2\theta$$

where

$e_x$ and $e_z$ are the errors due to a displacement of the force (P) applied respectively along the axis ($O_x$) of the bar (1) and along an axis ($O_z$) perpendicular to said bar axis and to the applied force (P),

$e_{x_0}$ and $e_{z_0}$ are the initial errors determined during the step which involves initial characterization of the transducer,

$C_x$ and $C_z$ are known constants which are established by design and by the conditions of initial characterization of the transducer, and in that the corrections to be made in the angle $\theta$ of each resistor are determined from the relations given above in order to cancel the errors $e_x$ and $e_z$.

3. A method according to claim 2, the resistance gages forming a zero angle $\theta$ with the axis $O_x$ of the bar, characterized in that the error $e_x$ aforesaid is cancelled by applying to a resistance gage having a suitable parity a correction :

$$d\theta_x \cong \left(\frac{C_x |e_x|}{4}\right) 1/2$$

and by applying a correction $-d\theta_x$ to the other gage having the same parity, and the error $e_z$ is cancelled by applying to a gage having a suitable parity a correction :

$$d\theta_z \cong \frac{C_z|e_z|}{4}$$

and by applying a correction $-d\theta_z$ to a gage having a different parity.

4. A method according to claim 2, the resistance gages comprising in each group having the same parity a gage forming an angle $\theta = 0$ and a gage forming an angle $\theta = \frac{\pi}{4}$, characterized in that the error $e_x$ is cancelled by applying to one of the gages $\theta = \frac{\pi}{4}$ a correction :

$$d\theta_x = \frac{C_x e_x}{2}$$

and the error $e_z$ is cancelled by applying to a gage $\theta = 0$ a correction :

$$d\theta_z = \frac{C_z e_z}{2}$$

5. A method according to one of claims 3 or 4, the resistance gages ($R_1$ ... $R_4$) being constituted by resistive layers having the shape of rectangles and applied on the bar (1), characterized in that the angle $\theta$ of the resistance gages is corrected by cutting two parallel grooves ($l_1$, $l_2$) in said layers so as to form a parallelogram with the two opposite sides of the rectangle formed by each gage, said grooves being inclined with respect to the initial direction of said gages at the angle $d\theta_x$ or $d\theta_z$ determined by the relations given above.

6. A method according to one of claims 3 or 4, the resistance gages ($R_1$, ... $R_4$) being constituted by resistive layers having the shape of rectangles and applied on the bar (1), characterized in that the angle $\theta$ of said resistance gages is corrected by forming notches ($e_1$, $e_2$, ...) transversely in the longitudinal edges of said gages in order to ensure that the resultant electrical direction ($L_1$) of said gages forms the angle $d\theta_x$ or $d\theta_z$ with the initial direction, said angle being determined by the relations given above.

7. A method according to one of claims 5 or 6, characterized in that said grooves ($l_1$) or ($l_2$) or notches ($e_1$, $e_2$, ...) are cut by means of a laser beam.

8. A method according to one of claims 3 or 4, the resistance gages being formed by a principal resistor ($R_0$) which makes a predetermined angle with the longitudinal axis ($O_x$) of the bar (1), each principal resistor ($R_0$) being connected in series with an additional resistor ($R_a$, $R_b$) having a low ohmic value in comparison with the ohmic value of the principal resistor ($R_0$) and inclined at a predetermined angle $\theta$ with respect to said principal resistor, characterized in that the errors ($e_x$) and ($e_z$) are cancelled by modifying the ohmic value of one or a number of said additional resistors ($R_a$, $R_b$), the effect of said modification being to modify the virtual angle made between the resistance gage and the axis ($O_x$) of the bar (1).

9. A resistance-gage force transducer (resistance gages $R_1$, ... $R_4$) comprising a resilient bar (1) such that one end of said bar is intended to be attached to a stationary support (2) and the other end is subjected to the force (P) to be measured, said bar (1) being adapted to carry resistance gages ($R_1$, ... $R_4$) electrically connected to each other so as to form a measuring bridge for delivering an electrical signal which is a function of the force (P) applied to said end of the bar, said transducer being so adjusted as to ensure that the signal is proportional to the applied force (P) and insensitive to the torsional and flexural couples generated by the displacements of the point of application of the force to be measured, characterized in that the angle $\theta$ formed between one or a plurality of resistance gages ($R_1$, ... $R_4$) and the longitudinal direction ($O_x$) of the bar (1) satisfies the following relations :

$$e_x = e_{x_0} + \frac{1}{C_x}\Sigma\cos 2\theta = 0$$

$$e_z = e_{z_0} + \frac{1}{C_z}\Sigma\sin 2\theta = 0$$

where

$e_x$ and $e_z$ are the errors due to a displacement of the force (P) applied respectively along the axis ($O_x$) of the bar (1) and along an axis ($O_x$) perpendicular to said axis of the bar and to the applied force,

$e_x$ and $e_z$ are the initial errors determined during a step which involves initial characterization of the transducer,

$C_x$ and $C_z$ are known constants established by design and by the conditions of said initial characterization.

10. A force transducer according to claim 9, the resistance gages ($R_1$, ... $R_4$) being constituted by resistive layers having the shape of rectangles and applied on the bar (1), characterized in that the resistance gages ($R_1$, ... $R_4$) each have two parallel grooves ($l_1$, $l_2$) cut so as to form a parallelogram with the two opposite sides of the rectangle formed by each gage, said grooves being inclined with respect to the initial direction of said gages at an angle $d\theta_x$ or $d\theta_z$ which is determined by the following relations :

$$d\theta_x \cong \left(\frac{C_x|e_x|}{4}\right)^{1/2}$$

$$d\theta_z \cong \frac{C_z|e_z|}{4}$$

11. A force transducer according to claim 9, characterized in that each resistance gage comprises a principal resistor ($R_0$) which makes a predetermined angle with the longitudinal axis ($O_x$) of the bar (1), each principal resistor ($R_0$) being connected in series with additional resistors ($R_a$, $R_b$, ...) having a low ohmic value in comparison with the ohmic value of the principal resistor ($R_0$) and inclined at a predetermined angle $\theta$ with respect to said principal resistor, and in that the ohmic value of one or a number of said additional resistors has been modified, the effect of said modification being to modify the virtual angle made between the resistance gage and the axis of the bar (1).

FIG.1

FIG.2

FIG.3

FIG.4

FIG.5

FIG.6

## FIG. 7

## FIG. 8